# EUROPEAN PATENT SPECIFICATION

(11) **EP 1 750 445 B1**
(45) Date of publication and mention of the grant of the patent: **11.01.2012**
(21) Application number: 05806473.4
(22) Date of filing: 07.11.2005
(51) Int. Cl.: H04N 7/173

(54) **METHOD AND SYSTEM FOR OBTAINING VIEWING INFORMATION IN BROADBAND VIDEO SYSTEM**
VERFAHREN UND SYSTEM ZUR GEWINNUNG VON ANSICHTSINFORMATIONEN IN EINEM BREITBANDVIDEOSYSTEM
PROCEDE ET SYSTEME POUR LA COLLECTE D'INFORMATION DE VISUALISATION DANS UN SYSTEME VIDEO LARGE BANDE

(30) Priority: 11.11.2004 CN 200410090648
(43) Date of publication of application: 07.02.2007
(73) Proprietor: Huawei Technologies Co., Ltd., Longgang District, Shenzhen Guangdong 518129 (CN)
(72) Inventor: QIN, Gang, Huawei Administration Building, Shenzhen, Guangdong 518129 (CN); LI, Bingshan, Huawei Administration Building, Shenzhen, Guangdong 518129 (CN)
(74) Representative: Körber, Martin Hans
(86) International application number: PCT/CN2005/001855
(87) International publication number: WO 2006/050661

(56) References cited:
- WO-A1-2004/043019
- WO-A1-2004/075511
- CA-A1- 2 325 787
- CN-A- 1 311 956
- CN-A- 1 386 383
- JP-A- 2001 060 928
- JP-A- 2002 335 543
- US-A1- 2003 147 392

## Description

### Field of the Invention

The present invention relates to broadband video technology, especially to a method and a system for obtaining viewing information in broadband video system.

### Background of the Invention

Statistics of Television (TV) viewing information, such as the number of viewers and the rating of a TV program, provides quantized data for TV station to learn about acceptance of the program and viewing preferences of the viewers in various levels. Through statistics on rating, the TV station may produce and schedule programs reasonably and improve competitiveness of the programs.

Since traditional satellite TV and Cable Television (CATV) are provided by broadcasting, technically speaking, it is impossible to perform statistics on viewing information (e.g., the TV programs being viewed by users and the viewing time).

At present, there are usually two methods for statistics on viewing information of TV programs: diary method and survey meter method.

Diary method: select by telephone or visiting a certain amount of typical households to participate the survey, to learn about what channels, what programs, and how long they view every day; the above information is obtained by the interviewers periodically.

The diary method not only requires heavy manpower and long statistic cycles but also may not reflect the actual viewing information and thereby results in low credibility, because it is a sampling survey and errors may occur easily during the manual operating procedures.

Survey meter method: choose a certain amount of typical households by telephone or visiting, and mount a rating survey meter on the TV in each of the households; as long as the household views any channel for a certain time, the survey meter will record the user's viewing data; the viewing data is collected by visiting interviewers or by telephone periodically, and then summarized and treated to produce rating reports.

The survey meter method requires mounting special instrument and heavy manpower, resulting in high cost. Though the survey meter method has higher credibility than the diary method, it may not reflect the viewing information timely, accurately, and completely.

Document CA 2 325 787 discloses a method and system for providing content providers with specific information about recipients receiving a multicast session such as a video stream, said information including a number of viewers, demographics, profile information, the location of the recipient host and the programming selected by the multicast recipient host. A measurement collector in an edge router determines the number of customer computers receiving the IP multicast content by utilizing the header information included in IGMP messages exchanged between the customer computers and the edge router, said messages indicating when host recipients join or leave an IP multicast session. This information is forwarded to a measurement server where it can be accessed by the providers of the streaming multimedia. Privacy is achieved by aggregating the collected information.

### Summary of the Invention

The prevent invention is to provide a method and a system for obtaining viewing information in broadband video system, which may obtain the viewing information timely, accurately, and completely at a lower cost.

The present invention provides a method for obtaining viewing information in broadband video system according to claim 1 and a corresponding system according to claim 12.

It is apparent from the above description of the technical solution that: the present invention takes full advantage of the corresponding relation between user terminals and multicast groups in broadband video system to obtain information of all user terminals viewing the programs in each multicast group in the broadband network, without the mounting of any dedicated survey meter on each user terminal; as the result, the present invention may avoid huge hardware cost and inaccurate investigation result by sampling; reporting user terminal information with the video flow user distribution device, the present invention eliminates the manual data acquisition and statistics process; since the above-mentioned corresponding relation may be maintained in real time and may accurately reflect the viewing information of programs in each multicast group, the present invention may reflect viewing information of programs in each multicast group timely and accurately; sending viewing information acquisition requests with the viewing acquisition and analysis center as required (e.g., periodically) to obtain user terminal information, the present invention may obtain viewing information timely and quickly as required; by setting the Permit Viewing Information Statistics attribute on user terminals, the present invention meets the requirement of each user terminal for privacy; the present invention may not only obtain the number of viewers and the rating of programs in each multicast at a certain time or in a certain period in accordance with the user terminal information corresponding to each multicast group, but also obtain viewing information of each program by occupation or income through statistics upon the registration information registered by the user when he subscribes a broadband video service, and thereby provide comprehensive information service for reasonable program production and scheduling; in conclusion, the technical solution provided in the present invention may implement the obtaining of the viewing information timely, comprehensively, and accurately at a lower cost.

### Brief Description of the Drawings

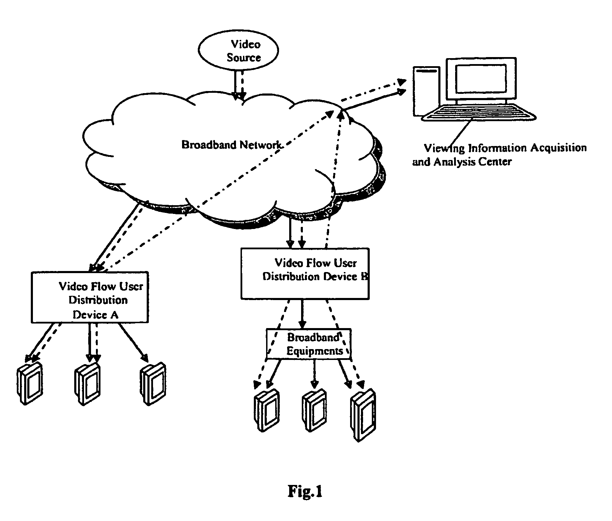

Fig.1 is a schematic diagram of the system for obtaining viewing information in broadband video system according to an embodiment of the present invention.

### Detailed Description of the Embodiments

In a broadband video system, the programs in each multicast group are sent to corresponding user terminals in accordance with the corresponding relation between multicast groups and user terminals; for example, a video flow user distribution device sends the programs in each multicast group over the broadband network to corresponding user terminals in accordance with the corresponding relation between multicast groups and user terminals stored and maintained in real time in it; in this way, the viewing information of programs of each multicast group may be reflected with user terminal information (e.g., the number of user terminals corresponding to the multicast group and the attributes of the user terminals, etc.); therefore, the key of the present invention is to obtain user terminal information in accordance with the corresponding relation between user terminals and multicast groups in a broadband video system, and determine the viewing information of programs in each multicast group in accordance with the obtained user terminal information.

The user terminal information described in the present invention includes the number of user terminals corresponding to each multicast group and the attributes of the user terminals, etc. The user terminal attributes include information such as user terminal identification (e.g., Virtual Local Area Network identification (VLAN ID), (Virtual Channel) VC ID, and network ID number, etc.). The viewing information described in the present invention includes: the number of viewers and the rating, etc.

Hereunder the system and the method for obtaining viewing information in broadband video system provided in the present invention is further detailed with reference to Fig.1.

A schematic diagram of the system for obtaining viewing information in broadband video system according to an embodiment of the present invention is shown in Fig. 1.

As shown in Fig. 1, the system for obtaining viewing information in broadband video system includes: a viewing acquisition and analysis center and at least a video flow user distribution device.

Usually, a viewing acquisition and analysis center may correspond to all video flow user distribution devices in a certain range of broadband network. Fig. 1 only shows exemplarily two video flow user distribution devices, i.e., video flow user distribution device A and video flow user distribution device B.

The viewing acquisition and analysis center may be arranged separately or in a network management equipment.

As shown in Fig.1, the physical connection between video source and broadband network, the physical connection between broadband network and each video flow user distribution device, the physical connection between each video flow user distribution device and user terminal(s) and the physical connection between viewing acquisition and analysis center and broadband network are represent by solid lines; the dashed lines represent the flow directions of the video data of the video source; the dot-dashed lines represent the flow directions of user terminal information related to viewing information between the viewing acquisition and analysis center and each video flow user distribution device.

The video source sends the programs on each channel to each video flow user distribution device in the broadband network with IP multicasting technology; the video flow user distribution device includes: Broadband Remote Access Server (BRAS), Digital Subscriber Line Access Multiplexer (DSLAM), and Local Area Network (LAN) Switch, etc.

The video flow user distribution device may maintain the corresponding relation between user terminals and multicast groups via Internet Group Management Protocol (IGMP) in real time, and sends multicast video data to corresponding user terminals in accordance with the corresponding relation.

The method with which the video flow user distribution device maintains the corresponding relation between user terminals and multicast groups via IGMP in real time may be: the video flow user distribution device receiving group report messages from the user terminals, and sending group query messages of IGMP at a certain time interval to check whether a user terminal has joined in or exited, so as to maintain the corresponding relation between user terminals and multicast groups in real time; or the video flow user distribution device maintaining the corresponding relation between user terminals and multicast groups in real time via a proxy or by snooping IGMP multicast group report messages and leave messages sending by the user terminals.

In the present invention, the information of user terminals that are viewing programs in multicast groups is obtained in accordance with the corresponding relation between user terminals and multicast groups maintained in real time by a video flow user distribution device, and thereby the viewing information of programs in each multicast group in accordance with the user terminal information is determined.

To meet the requirement of user terminals for privacy, the present invention may also support setting the Permit Viewing Information Statistics attribute in accordance with the specific demand of each user terminal; if a user terminal is reluctant to participate the statistics of viewing information, the Permit Viewing Information Statistics attribute of which may be set to "Disabled"; if a user terminal is willing to participate the statistics of viewing information, the attribute of which may be set to "Enabled". When obtaining user terminal information, the video flow user distribution device shall determine the user terminals that permit viewing information statistics in accordance with the Permit Viewing Information Statistics attribute of each user terminal.

The specific implementation procedure for setting the Permit Viewing Information Statistics attribute of each user terminal according to an embodiment of the present invention is: the viewing acquisition and analysis center obtaining the information of the Permit Viewing Information Statistics attribute information of a user terminal, and forwarding the information to the video flow user distribution device corresponding to the user terminal; the video flow user distribution device setting the Permit Viewing Information Statistics attribute of the user terminal in accordance with the received attribute information.

The viewing acquisition and analysis center may carry the information of the Permit Viewing Information Statistics attribute information of the user terminal in an attribute setting request and transmits the request to the video flow user distribution device; or it may store the obtained information of the Permit Viewing Information Statistics attribute information of the user terminal, and then transmits a corresponding attribute information to a video flow user distribution device when the video flow user distribution device initiates a request actively to it at a predetermined time interval.

The attribute setting request may be based on a dedicated acquisition protocol, a network management protocol, or in the form of command line of the video flow user distribution device, i.e., the attribute setting request may be transmitted to the corresponding video flow user distribution device over a dedicated network via a dedicated acquisition protocol, over a broadband network via a network protocol, or be received directly by means of command line of the video flow user distribution device.

Regardless of whether the Permit Viewing Information Statistics attribute of a user terminal is set or not, the user terminal information should be obtained in the present invention in accordance with the corresponding relation between user terminals and multicast groups; that is, if the Permit Viewing Information Statistics attribute of the user terminal is set, the user terminal information should be obtained in the present invention in accordance with the corresponding relation between user terminals of which the attribute is set to "Enabled" and multicast groups; if the Permit Viewing Information Statistics attribute of the user terminal is not set, the user terminal information should be obtained in the present invention in accordance with the corresponding relation between all user terminals and multicast groups.

The specific implementation procedure for obtaining user terminal information in accordance with the corresponding relation between user terminals and multicast groups may be: a video flow user distribution device reports user terminal information actively to the viewing acquisition and analysis center as indicated in a setting (i.e., at a predetermined time interval); or the video flow user distribution device reports user terminal information in accordance with the viewing information acquisition request sent by the viewing acquisition and analysis center.

The viewing acquisition and analysis center may transmit the viewing information acquisition request to the video flow user distribution devices in the broadband network as required; for example, it transmits the viewing information acquisition request to the video flow user distribution devices in the broadband network as required by statistics or at a predetermined time interval.

The above predetermined time interval may be: 5 seconds, 10 minutes, 20:30 in each day, 20:00, 21:00, or 22:00 in each day, or 15:00 in each Monday, etc.

The viewing information acquisition request may be based on a dedicated acquisition protocol or network management protocol, i.e., the viewing information acquisition request may be transmitted to the video flow user distribution devices over a dedicated network via a dedicated acquisition protocol or over a broadband network via a network protocol.

Based on the transport speed of network transmission, information of user terminals in the broadband network may be obtained in a second-level period in the present invention, so as to meet the demand for statistics of viewing information at any time.

After receiving the viewing information acquisition request, each video flow user distribution device transmits user terminal information (the number and the attributes of the user terminals corresponding to each multicast group, etc.) to the viewing acquisition and analysis center according to the corresponding relation between user terminals and multicast groups which maintains in real time.

The viewing acquisition and analysis center receives information such as the number of user terminals and user terminal attributes, etc. from the video flow user distribution devices and performs statistics on the information, to determine the number of viewers of programs in each multicast group at a certain time or in a certain period.

To meet a specific statistics requirement, the present invention also supports configuring the number of user terminals that will be neglected in the statistics (e.g., the number of user terminals with the Permit Viewing Information Statistics attribute set to "Disabled"); if there is no user terminal to be neglected in the statistics (e.g., no user terminal with the Permit Viewing Information Statistics attribute set to "Disabled"), the number of user terminal to be neglected in the statistics may be set to 0.

The viewing acquisition and analysis center divides the number of viewers of a program in a multicast group by the difference between the total number of user terminals that have subscribed the broadband video service and the number of user terminals to be neglected, so as to determine the rating of the program in the multicast group at a certain time or in a certain period.

The viewing acquisition and analysis center according to an embodiment of the present invention may also perform statistics on the number of viewers and the rating of a program in each multicast group in accordance with the classified user terminal information. The classified information includes: the information registered by the user when he subscribes a broadband video service, such as gender, age, income, and educational level of the user.

The viewing acquisition and analysis center may perform statistics on the number of viewers of a program in a multicast group at a certain time or in a certain period by occupation or income in accordance with the classified information; the viewing acquisition and analysis center divides the above statistical number of viewers by the difference between the total number of user terminals that have subscribed the broadband video service and the number of user terminals to be neglected in the statistics, so as to determine the rating of the program in a multicast group at a certain time or in a certain period by occupation or income. Wherein, the number of user terminals to be neglected has the same meaning as the above description. With the statistics on the number of viewers and the rating according to the classified information, the present invention may provide different types of comprehensive viewing information, so as to provide support for producing and scheduling TV programs more reasonably.

Though the present invention is described in the embodiments as above, those skilled in the art may understand that diverse modifications and variations may be made to the present invention, without departing from the spirit of the present invention; however, any of those modifications or variations shall fall into the protect scope of the present invention as defined in the claims.

## Claims

1. A method for obtaining viewing information in broadband video system, comprising
obtaining, by a video flow user distribution device, a Permit Viewing Information Statistics attribute of each user terminal and setting the Permit Viewing Information Statistics attribute of each user terminal in accordance with the specific demand of each user terminal, wherein the Permit Viewing Information Statistics attribute may be set to Disabled to indicate that a user terminal is reluctant to participate the statistics of viewing information, determining the corresponding relation between user terminals and multicast groups in accordance with the Permit Viewing Information Statistics attribute of each user terminal;
obtaining, by the video flow user distribution device, user terminal information in accordance with the corresponding relation between the user terminals and multicast groups in the broadband video system, and
transmitting, by the video flow user distribution device, the user terminal information to a viewing acquisition and analysis center;
determining, by the viewing acquisition and analysis center, the viewing information of programs in each multicast group in accordance with said user terminal information;
wherein the user terminal information comprises the number of user terminals corresponding to each multicast group and the attributes of the user terminals;
wherein the viewing information comprises the number of viewers and the rating:
wherein said corresponding relation between user terminals and multicast groups is a corresponding relation between user terminals and multicast groups based on Internet Group Management Protocol (IGMP).

2. The method as in claim 1, wherein said video flow user distribution device obtains the Permit Viewing Information Statistics attribute of the user terminal through the following steps:
obtaining, by the viewing acquisition and analysis center, information of the Permit

3. The method as in claim 2, wherein said attribute setting request is an attribute setting request based on a dedicated acquisition protocol or a network management protocol, or an attribute setting request in the form of command line of the video flow user distribution device.

4. The method as in claim 1, wherein said method further comprises
transmitting, by said viewing acquisition and analysis center, a viewing information acquisition request to at least one video flow user distribution device as required;
after receiving said request, obtaining, by each of said video flow user distribution devices, the user terminal information in accordance with the corresponding relation between user terminals and multicast groups stored by the video flow user distribution device and transmitting said user terminal information to said viewing acquisition and analysis center.

5. The method as in claim 4, wherein: transmitting, by said viewing acquisition and analysis center, a viewing information acquisition request to at least one video flow user distribution device as required, comprises
transmitting, by said viewing acquisition and analysis center, the viewing information acquisition request to said at least one video flow user distribution device at a predetermined time interval.

6. The method as in claim 4, wherein said viewing information acquisition request is a viewing information acquisition request based on a dedicated acquisition protocol or a network management protocol.

7. The method as in claim 1, wherein: obtaining, by the video flow user distribution device, user terminal information in accordance with the corresponding relation between the user terminals and multicast groups in the broadband video system, and transmitting the user terminal information to a viewing acquisition and analysis center, comprises
obtaining, by said video flow user distribution device, the user terminal information at a predetermined time interval in accordance with the corresponding relation between user terminals and multicast groups stored by said video flow user distribution device, and transmitting the user terminal information to said viewing acquisition and analysis center.

8. The method as in claim 1, wherein: determining, by the viewing acquisition and analysis center, the viewing information of programs in each multicast group in accordance with said user terminal information, comprises
b1 determining, by said viewing acquisition and analysis center, the number of viewers of programs in each multicast group at a predetermined time or in a predetermined period in accordance with the number of user terminals corresponding to each multicast group transmitted by said video flow user distribution device;b2. obtaining, by said viewing acquisition and analysis center, the total number of user terminals that have subscribed the broadband video service, as well as the number of user terminals that are predetermined to be neglected;
b3. determining, by said viewing acquisition and analysis center, the rating of programs in each multicast group at a predetermined time or in a predetermined period respectively in accordance with the number of viewers of programs in each multicast group, the total number of user terminals that have subscribed the broadband video service, and the number of user terminals that are predetermined to be neglected.

9. The method as in claim 8, wherein said number of user terminals that are predetermined to be neglected includes the number of user terminals of which the Permit Viewing Information Statistics attribute is set to "Disabled".

10. The method as in claim 8, wherein said method further comprises
determining, by said viewing acquisition and analysis center, the rating of programs in each multicast group at a predetermined time or in a predetermined period for user terminals in each type of registration information in accordance with the number of viewers of programs in each multicast group, the total number of user terminals that have subscribed the broadband video service, the number of user terminals that are predetermined to be neglected, and the registration information of user terminals.
Viewing Information Statistics attribute of the user terminal, carrying said information in an attribute setting request, and sending said attribute setting request to the video flow user distribution device corresponding to the user terminal; or
obtaining and storing, by the viewing acquisition and analysis center, the information of the Permit Viewing Information Statistics attribute of the user terminal;
obtaining, by the video flow user distribution device, the information of the Permit Viewing Information Statistics attribute of the corresponding user terminal at a predetermined time interval from the information stored by said viewing acquisition and analysis center.

11. The method as in claim 10, wherein said registration information comprises gender, age, occupation, educational level, and income.

12. A system for obtaining viewing information in broadband video system, comprising
at least a video flow user distribution device, adapted to obtain a Permit Viewing Information Statistics attribute of each user terminal and set the Permit Viewing Information Statistics attribute of each user terminal in accordance with the specific demand of each user terminal, wherein the Permit Viewing Information Statistics attribute may be set to Disabled to indicate that a user terminal is reluctant to participate the statistics of viewing information; determine the corresponding relation between user terminals and multicast groups in accordance with the Permit Viewing Information Statistics attribute of each user terminal; obtain user terminal information in accordance with the corresponding relation between user terminals and multicast groups, and transmit the user terminal information to a viewing acquisition and analysis center;
the viewing acquisition and analysis center, adapted to determine the viewing information of programs in each multicast group in accordance with the received user terminal information;
wherein the user terminal information comprises the number of user terminals corresponding to each multicast group and the attributes of the user terminals;
wherein the viewing information comprises the number of viewers and the rating; wherein said corresponding relation between user terminals and multicast groups is a corresponding relation between user terminals and multicast groups based on Internet Group Management Protocol (IGMP).

13. The system as in claim 12, wherein said video flow user distribution device is a Broadband Remote Access Server (BRAS), a Digital Subscriber Line Access Multiplexer (DSLAM), or a Local Area Network (LAN) Switch.

14. The system as in claim 12 or 13, wherein said viewing acquisition and analysis center is arranged separately or in a network management equipment.

## Patentansprüche

1. Verfahren zum Erhalten von Zuschauinformationen in einem Breitband-Videosystem, mit den folgenden Schritten:
Erhalten eines Attributs des Zulassens von Zuschauinformationsstatistik jedes Benutzerendgeräts durch eine Videofluss-Benutzerverteilungseinrichtung und Setzen des Attributs des Zulassens von Zuschauinformationsstatistik jedes Benutzerendgeräts gemäß dem spezifischen Bedarf jedes Benutzerendgeräts, wobei das Attribut des Zulassens von Zuschauinformationsstatistik auf Gesperrt gesetzt werden kann, um anzuzeigen, dass ein Benutzerendgerät nicht geneigt ist, an der Statistik von Zuschauinformationen teilzunehmen, Bestimmen der Korrespondenzbeziehung zwischen Benutzerendgeräten und Multicast-Gruppen gemäß dem Attribut des Zulassens von Zuschauinformationsstatistik jedes Benutzerendgeräts;
Erhalten von Benutzerendgerätinformationen durch die Videofluss-Benutzerverteilungseinrichtung gemäß der Korrespondenzbeziehung zwischen den Benutzerendgeräten und Multicast-Gruppen in dem Breitband-Videosystem und
Übertragen der Benutzerendgerätinformationen durch die Videofluss-Benutzerverteilungseinrichtung zu einer Zuschauakquisitions- und Analysestelle;
Bestimmen der Zuschauinformationen von Programmen in jeder Multicast-Gruppe durch die Zuschauakquisitions- und Analysestelle gemäß den Benutzerendgerätinformationen;
wobei die Benutzerendgerätinformationen die Anzahl von jeder Multicast-Gruppe entsprechenden Benutzerendgeräten und die Attribute der Benutzerendgeräte umfassen;
wobei die Zuschauinformationen die Anzahl von Zuschauern und die Einschaltquote umfassen;
wobei die Korrespondenzbeziehung zwischen Benutzerendgeräten und Multicast-Gruppen eine Korrespondenzbeziehung zwischen Benutzerendgeräten und Multicast-Gruppen auf der Basis von Internet Group Management Protocol bzw. IGMP ist.

2. Verfahren nach Anspruch 1, wobei die Videofluss-Benutzerverteilungseinrichtung das Attribut des Zulassens von Zuschauinformationsstatistik des Benutzerendgeräts durch die folgenden Schritte erhält:
Erhalten von Informationen des Attributs des Zulassens von Zuschauinformationsstatistik des Benutzerendgeräts durch die Zuschauaquisititions- und Analysestelle, Führen der Informationen in einer Attributsetzanforderung und
Senden der Attributsetzanforderung zu der dem Benutzerendgerät entsprechenden Videofluss-Benutzerverteilungseinrichtung; oder
Erhalten und Speichern der Informationen des Attributs des Zulassens von Zuschauinformationsstatistik des Benutzerendgeräts durch die Zuschauakquisitions- und Analysestelle;
Erhalten der Informationen des Attributs des Zulassens von Zuschauinformationsstatistik des entsprechenden Benutzerendgeräts durch die Videofluss-Benutzerverteilungseinrichtung in einem vorbestimmten Zeitintervall aus den durch die Zuschauakquisitions- und Analysestelle gespeicherten Informationen.

3. Verfahren nach Anspruch 2, wobei die Attributsetzanforderung eine Attributsetzanforderung auf der Basis eines dedizierten Akquisitionsprotokolls oder eines Netzwerkverwaltungsprotokolls oder eine Attributsetzanforderung in Form einer Befehlszeile der Videofluss-Benutzerverteilungseinrichtung ist.

4. Verfahren nach Anspruch 1, wobei das Verfahren ferner Folgendes umfasst:
Übertragen einer Zuschauinformations-Akquisitionsanforderung durch die Zuschauakquisitions- und Analysestelle zu mindestens einer Videofluss-Benutzerverteilungseinrichtung je nach Erfordernis;
nach dem Empfangen der Anforderung, Erhalten der Benutzerendgerätinformationen durch jede der Videofluss-Benutzerverteilungseinrichtungen gemäß der durch die Videofluss-Benutzerverteilungseinrichtung gespeicherten Korrespondenzbeziehung zwischen Benutzerendgeräten und Multicast-Gruppen und Übertragen der Benutzerendgerätinformationen zu der Zuschauakquisitions- und Analysestelle.

5. Verfahren nach Anspruch 4, wobei das Übertragen einer Zuschauinformations-Akquisitionsanforderung durch die Zuschauakquisitions- und Analysestelle zu mindestens einer Videofluss-Benutzerverteilungseinrichtung je nach Erfordernis Folgendes umfasst:
Übertragen der Zuschauinformations-Akquisitionsanforderung durch die Zuschauakquisitions- und Analysestelle zu der mindestens einen Videofluss-Benutzerverteilungseinrichtung in einem vorbestimmten Zeitintervall.

6. Verfahren nach Anspruch 4, wobei die Zuschauinformations-Akquisitionsanforderung eine Zuschauinformations-Akquisitionsanforderung auf der Basis eines dedizierten Akquisitionsprotokolls oder eines Netzwerkverwaltungsprotokolls ist.

7. Verfahren nach Anspruch 1, wobei das Erhalten von Benutzerendgerätinformationen durch die Videofluss-Benutzerverteilungseinrichtung gemäß der Korrespondenzbeziehung zwischen den Benutzerendgeräten und Multicast-Gruppen in dem Breitband-Videosystem und das Übertragen der Benutzerendgerätinformationen zu einer Zuschauakquisitions- und Analysestelle Folgendes umfasst:
Erhalten der Benutzerendgerätinformationen durch die Videofluss-Benutzerverteilungseinrichtung in einem vorbestimmten Zeitintervall gemäß der durch die Videofluss-Benutzerverteilungseinrichtung gespeicherten Korrespondenzbeziehung zwischen Benutzerendgeräten und Multicast-Gruppen und
Übertragen der Benutzerendgerätinformationen zu der Zuschauakquisitions- und Analysestelle.

8. Verfahren nach Anspruch 1, wobei das Bestimmen der Zuschauinformationen von Programmen in jeder Multicast-Gruppe durch die Zuschauakquisitions- und Analysestelle gemäß den Benutzerendgerätinformationen Folgendes umfasst:
b1. Bestimmen der Anzahl von Zuschauern von Programmen in jeder Multicast-Gruppe durch die Zuschauakquisitions- und Analysestelle zu einem vorbestimmten Zeitpunkt oder in einer vorbestimmten Periode gemäß der Anzahl von jeder Multicast-Gruppe entsprechenden Endgeräten, die durch die Videofluss-Benutzerverteilungseinrichtung übertragen wird;
b2. Erhalten der Gesamtzahl von Benutzerendgeräten, die den Breitband-Videodienst subskribiert haben, sowie der Anzahl von Benutzerendgeräten, die dafür vorbestimmt sind, vernachlässigt zu werden, durch die Zuschauakquisitions- und Analysestelle;
b3. Bestimmen der Bewertung von Programmen in jeder Multicast-Gruppe durch die Zuschauakquisitions- und Analysestelle zu einem vorbestimmten Zeitpunkt oder in einer vorbestimmten Periode jeweils gemäß der Anzahl von Zuschauern von Programmen in jeder Multicast-Gruppe, der Gesamtzahl von Benutzerendgeräten, die den Breitband-Videodienst subskribiert haben, und der Anzahl von Benutzerendgeräten, die dafür vorbestimmt sind, vernachlässigt zu werden.

9. Verfahren nach Anspruch 8, wobei die Anzahl von Benutzerendgeräten, die dafür vorbestimmt sind, vernachlässigt zu werden, die Anzahl von Benutzerendgeräten umfasst, von denen das Attribut des Zulassens von Zuschauinformationsstatistik auf "Gesperrt" gesetzt ist.

10. Verfahren nach Anspruch 8, wobei das Verfahren ferner Folgendes umfasst:
Bestimmen der Bewertung von Programmen in jeder Multicast-Gruppe durch die Zuschauakquisitions- und Analysestelle zu einem vorbestimmten Zeitpunkt oder in einer vorbestimmten Periode für Benutzerendgeräte in jeder Art von Registrationsinformationen gemäß der Anzahl von Zuschauern von Programmen in jeder Multicast-Gruppe, der Gesamtzahl von Benutzerendgeräten, die den Breitband-Videodienst subskribiert haben, die Anzahl von Benutzerendgeräten, die dafür vorbestimmt sind, vernachlässigt zu werden, und den Registrationsinformationen von Benutzerendgeräten.

11. Verfahren nach Anspruch 10, wobei die Registrationsinformationen Geschlecht, Alter, Beruf, Bildungsstand und Einkommen umfassen.

12. System zum Erhalten von Zuschauinformationen in einem Breitband-Videosystem, umfassend:
mindestens eine Videofluss-Benutzerverteilungseinrichtung, die dafür ausgelegt ist,
ein Attribut des Zulassens von Zuschauinformationsstatistik jedes Benutzerendgeräts zu erhalten und das Attribut des Zulassens von Zuschauinformationsstatistik jedes Benutzerendgeräts gemäß dem spezifischen Bedarf jedes Benutzerendgeräts zu setzen, wobei das Attribut des Zulassens von Zuschauinformationsstatistik auf Gesperrt gesetzt werden kann, um anzuzeigen, dass ein Benutzerendgerät nicht geneigt ist, an der Statistik von Zuschauinformationen teilzunehmen; die Korrespondenzbeziehung zwischen Benutzerendgeräten und Multicast-Gruppen gemäß dem Attribut des Zulassens von Zuschauinformationsstatistik jedes Benutzerendgeräts zu bestimmen; Benutzerendgerätinformationen gemäß der Korrespondenzbeziehung zwischen Benutzerendgeräten und Multicast-Gruppen zu erhalten und die Benutzerendgerätinformationen zu einer Zuschauakquisitions- und Analysestelle zu übertragen;
die Zuschauakquisitions- und Analysestelle, die dafür ausgelegt ist, die Zuschauinformationen von Programmen in jeder Multicast-Gruppe gemäß den empfangenen Benutzerendgerätinformationen zu bestimmen;
wobei die Benutzerendgerätinformationen die Anzahl von jeder Multicast-Gruppe entsprechenden Benutzerendgeräten und die Attribute der Benutzerendgeräte umfassen;
wobei die Zuschauinformationen die Anzahl von Zuschauern und die Einschaltquote umfassen;
wobei die Korrespondenzbeziehung zwischen Benutzerendgeräten und Multicast-Gruppen eine Korrespondenzbeziehung zwischen Benutzerendgeräten und Multicast-Gruppen auf von Basis des Internet Group Management Protocol bzw. IGMP ist.

13. System nach Anspruch 12, wobei die Videofluss-Benutzerverteilungseinrichtung ein Broadband Remote Access Server bzw. BRAS, ein Digital Subscriber Line Access Multiplexer bzw. DSLAM oder ein Switch des lokalen Netzwerks bzw. LAN ist.

14. System nach Anspruch 12 oder 13, wobei die Zuschauakquisitions- und Analysestelle separat oder in einer Netzwerkverwaltungsanlage angeordnet ist.

## Revendications

1. Procédé permettant d'obtenir des informations d'écoute dans un système vidéo à large bande, comprenant les étapes consistant à :
obtenir, au moyen d'un dispositif de distribution d'utilisateur de flux vidéo, un attribut de permission de statistiques d'informations d'écoute associé à chaque terminal d'utilisateur et paramétrer l'attribut de permission de statistiques d'informations d'écoute de chaque terminal d'utilisateur en fonction de la demande particulière de chaque terminal d'utilisateur, l'attribut de permission de statistiques d'informations d'écoute pouvant être paramétré sur "Désactivé" pour indiquer qu'un terminal d'utilisateur n'est pas disposé à prendre part aux statistiques d'informations d'écoute ; établir la relation de correspondance entre des terminaux d'utilisateur et
des groupes de multidiffusion en fonction de l'attribut de permission de statistiques d'informations d'écoute de chaque terminal d'utilisateur ;
obtenir, au moyen du dispositif de distribution d'utilisateur de flux vidéo, des informations de terminaux d'utilisateur en fonction de la relation de correspondance entre les terminaux d'utilisateur et des groupes de multidiffusion dans le système vidéo à large bande, et
transmettre, au moyen du dispositif de distribution d'utilisateur de flux vidéo, les informations de terminaux d'utilisateur à un centre d'acquisition et d'analyse d'écoute ;
établir, au moyen du centre d'acquisition et d'analyse d'écoute, les informations d'écoute relatives à des programmes dans chaque groupe de multidiffusion en fonction desdites informations de terminaux d'utilisateur ;
les informations de terminaux d'utilisateur comprenant le nombre de terminaux d'utilisateur correspondant à chaque groupe de multidiffusion et les attributs des terminaux d'utilisateur ;
les informations d'écoute comprenant le nombre de téléspectateurs et l'indice d'écoute ;
ladite relation de correspondance entre les terminaux d'utilisateur et des groupes de multidiffusion étant une relation de correspondance entre les terminaux d'utilisateur et des groupes de multidiffusion basée sur le protocole de gestion de groupes Internet (IGMP).

2. Procédé selon la revendication 1, ledit dispositif de distribution d'utilisateur de flux vidéo obtenant l'attribut de permission de statistiques d'informations d'écoute associé au terminal d'utilisateur en mettant en oeuvre les étapes consistant à :
obtenir, au moyen du centre d'acquisition et d'analyse d'écoute, des informations relatives à l'attribut de permission de statistiques d'informations d'écoute associé au terminal d'utilisateur, acheminer lesdites informations dans une demande de paramétrage d'attribut, et transmettre ladite demande de paramétrage d'attribut au dispositif de distribution d'utilisateur de flux vidéo correspondant au terminal d'utilisateur ; ou
obtenir et mémoriser, au moyen du centre d'acquisition et d'analyse d'écoute, les informations relatives à l'attribut de permission de statistiques d'informations d'écoute associé au terminal d'utilisateur ;
obtenir, au moyen du dispositif de distribution d'utilisateur de flux vidéo, les informations relatives à l'attribut de permission de statistiques d'informations d'écoute associé au terminal d'utilisateur correspondant à un intervalle de temps prédéfini à partir des informations mémorisées par ledit centre d'acquisition et d'analyse d'écoute.

3. Procédé selon la revendication 2, ladite demande de paramétrage d'attribut étant une demande de paramétrage d'attribut basée sur un protocole d'acquisition spécialisé ou un protocole de gestion de réseau, ou une demande de paramétrage d'attribut sous la forme d'une ligne de commande du dispositif de distribution d'utilisateur de flux vidéo.

4. Procédé selon la revendication 1, comprenant en outre les étapes consistant à :
transmettre, au moyen dudit centre d'acquisition et d'analyse d'écoute, une demande d'acquisition d'informations d'écoute à au moins un dispositif de distribution d'utilisateur de flux vidéo selon le cas ;
après réception de ladite demande, obtenir, au moyen de chaque dispositif de distribution d'utilisateur de flux vidéo, les informations de terminaux d'utilisateur en fonction de la relation de correspondance entre les terminaux d'utilisateur et des groupes de multidiffusion mémorisée par le dispositif de distribution d'utilisateur de flux vidéo, et transmettre lesdites informations de terminaux d'utilisateur audit centre d'acquisition et d'analyse d'écoute.

5. Procédé selon la revendication 4, l'étape consistant à transmettre, au moyen dudit centre d'acquisition et d'analyse d'écoute, une demande d'acquisition d'informations d'écoute à au moins un dispositif de distribution d'utilisateur de flux vidéo selon le cas comprenant l'étape consistant à :
transmettre, au moyen dudit centre d'acquisition et d'analyse d'écoute, la demande d'acquisition d'informations d'écoute audit au moins un dispositif de distribution d'utilisateur de flux vidéo à un intervalle de temps prédéfini.

6. Procédé selon la revendication 4, ladite demande d'acquisition d'informations d'écoute étant une demande d'acquisition d'informations d'écoute basée sur un protocole d'acquisition spécialisé ou un protocole de gestion de réseau.

7. Procédé selon la revendication 1, les étapes consistant à obtenir, au moyen du dispositif de distribution d'utilisateur de flux vidéo, des informations de terminaux d'utilisateur en fonction de la relation de correspondance entre les terminaux d'utilisateur et des groupes de multidiffusion dans le système vidéo à large bande, et transmettre les informations de terminaux d'utilisateur à un centre d'acquisition et d'analyse d'écoute comprenant les étapes consistant à :
obtenir, au moyen dudit dispositif de distribution d'utilisateur de flux vidéo, les informations de terminaux d'utilisateur à un intervalle de temps prédéfini en fonction de la relation de correspondance entre les terminaux d'utilisateur et des groupes de multidiffusion mémorisée par ledit dispositif de distribution d'utilisateur de flux vidéo, et transmettre les informations de terminaux d'utilisateur audit centre d'acquisition et d'analyse d'écoute.

8. Procédé selon la revendication 1, l'étape consistant à établir, au moyen du centre d'acquisition et d'analyse d'écoute, les informations d'écoute relatives à des programmes dans chaque groupe de multidiffusion en fonction desdites informations de terminaux d'utilisateur comprenant les étapes consistant à :
b1. établir, au moyen dudit centre d'acquisition et d'analyse d'écoute, le nombre de téléspectateurs de programmes dans chaque groupe de multidiffusion à un moment prédéfini ou dans une période prédéfinie en fonction du nombre de terminaux d'utilisateur correspondant à chaque groupe de multidiffusion transmis par ledit dispositif de distribution d'utilisateur de flux vidéo ;
b2. obtenir, au moyen dudit centre d'acquisition et d'analyse d'écoute, le nombre total de terminaux d'utilisateur abonnés au service vidéo à large bande, ainsi que le nombre de terminaux d'utilisateur à omettre de façon prédéfinie ;
b3. établir, au moyen dudit centre d'acquisition et d'analyse d'écoute, l'indice d'écoute de programmes dans chaque groupe de multidiffusion à un moment prédéfini ou dans une période prédéfinie respectivement en fonction du nombre de téléspectateurs des programmes dans chaque groupe de multidiffusion, du nombre total de terminaux d'utilisateur abonnés au service vidéo à large bande et du nombre de terminaux d'utilisateur à omettre de façon prédéfinie.

9. Procédé selon la revendication 8, ledit nombre de terminaux d'utilisateur à omettre de façon prédéfinie comprenant le nombre de terminaux d'utilisateur dont l'attribut de permission de statistiques d'informations d'écoute est paramétré sur "Désactivé".

10. Procédé selon la revendication 8, comprenant en outre l'étape consistant à :
établir, au moyen dudit centre d'acquisition et d'analyse d'écoute, l'indice d'écoute de programmes dans chaque groupe de multidiffusion à un moment prédéfini ou dans une période prédéfinie pour des terminaux d'utilisateur dans chaque type d'informations d'inscription en fonction du nombre de téléspectateurs de programmes dans chaque groupe de multidiffusion, du nombre total de terminaux d'utilisateur abonnés au service vidéo à large bande, du nombre de terminaux d'utilisateur à omettre de façon prédéfinie, et des informations d'inscription relatives aux terminaux d'utilisateur.

11. Procédé selon la revendication 10, lesdites informations d'inscription comprenant le sexe, l'âge, la profession, le niveau d'études et les revenus.

12. Système permettant d'obtenir des informations d'écoute dans un système vidéo à large bande, comprenant :
au moins un dispositif de distribution d'utilisateur de flux vidéo, conçu pour obtenir un attribut de permission de statistiques d'informations d'écoute associé à chaque terminal d'utilisateur et paramétrer l'attribut de permission de statistiques d'informations d'écoute de chaque terminal d'utilisateur en fonction de la demande particulière de chaque terminal d'utilisateur, l'attribut de permission de statistiques d'informations d'écoute pouvant être paramétré sur "Désactivé" pour indiquer qu'un terminal d'utilisateur n'est pas disposé à prendre part aux statistiques d'informations d'écoute ; établir la relation de correspondance entre des terminaux d'utilisateur et
des groupes de multidiffusion en fonction de l'attribut de permission de statistiques d'informations d'écoute de chaque terminal d'utilisateur ; obtenir des informations de terminaux d'utilisateur en fonction de la relation de correspondance entre les terminaux d'utilisateur et des groupes de multidiffusion ; et transmettre les informations de terminaux d'utilisateur à un centre d'acquisition et d'analyse d'écoute ;
le centre d'acquisition et d'analyse d'écoute, conçu pour établir les informations d'écoute relatives à des programmes dans chaque groupe de multidiffusion en fonction des informations de terminaux d'utilisateur reçues ;
les informations de terminaux d'utilisateur comprenant le nombre de terminaux d'utilisateur correspondant à chaque groupe de multidiffusion et les attributs des terminaux d'utilisateur ;
les informations d'écoute comprenant le nombre de téléspectateurs et l'indice d'écoute ;
ladite relation de correspondance entre les terminaux d'utilisateur et des groupes de multidiffusion étant une relation de correspondance entre les terminaux d'utilisateur et des groupes de multidiffusion basée sur le protocole de gestion de groupes Internet (IGMP).

13. Système selon la revendication 12, ledit dispositif de distribution d'utilisateur de flux vidéo étant un serveur d'accès à distance à large bande (BRAS), un multiplexeur d'accès à la ligne d'abonné numérique (DSLAM) ou un commutateur de réseau local (LAN).

14. Système selon la revendication 12 ou 13, ledit centre d'acquisition et d'analyse d'écoute étant distinct ou intégré à un équipement de gestion de réseau.
